# EUROPEAN PATENT APPLICATION

(11) **EP 1 944 726 A1**
(43) Date of publication of application: **16.07.2008**
(21) Application number: 06715555.6
(22) Date of filing: 10.03.2006
(51) Int. Cl.: G06Q 30/00

(54) **INFORMATION COMMUNICATING DEVICE, SERVER, AND CONTENT PRESENTING METHOD**

(30) Priority: 02.11.2005 JP 2005319078
(71) Applicant: MATSUSHITA ELECTRIC INDUSTRIAL CO., LTD., Osaka 571-8501 (JP)
(72) Inventor: USHIJIMA, Tetsuya c/o Matsushita Electric Industrial Co.,Ltd Intellectual Property Rights Operations Company, 2-1-61, Shiromi, Chuo-ku Osaka 540-6207 (JP)
(74) Representative: Grünecker, Kinkeldey, Stockmair & Schwanhäusser Anwaltssozietät
(86) International application number: PCT/JP2006/304785
(87) International publication number: WO 2007/052373

(57) **Abstract**

Providing an information communications apparatus, a server, and a contents providing method which fuel a user's willingness to browse, view, or purchase contents.

Contents control means 40 acquires a disclosure status of restricted data registered in disclosure information management means 50, and reports the disclosure status to output means 70, to thus control specifics to be reported to display means 80. Thereby, the user is previously notified that restricted data whose disclosure is limited are included in the contents data, thereby causing the user to have a sense of anticipation for the restricted data and fueling the user's willingness to browse, view, or purchase the contents data.

## Description

### <Technical Field>

The present invention relates to an information communications apparatus, a server, and a contents provision method for performing browsing and distributing of contents data, or the like.

### <Background Art>

These days, the service delivery via the Internet has become prevalent, and contents, such as text, images, music, motion pictures, and the like, are present in large numbers on the Web. Users have become able to acquire a wide variety of pieces of information by use of an information communications apparatus, such as a personal computer, a PDA (Personal Digital Assistance), a portable cellular phone, or the like.

Under these circumstances, a contents provider encounters difficulty in attracting the user to have an interest in, to browse, to view, or to purchase contents provided by the provider among a plurality of contents.

A related-art method for accepting entries for a prize contest requires browsing of a predetermined Web page as a condition for accepting an entry for a prize contest, thereby forcefully causing the user to browse contents (see, e.g., Patent Document 1).
Patent Document 1: JP-A-2003-91615

### <Discloser of the Invention>

### <Problem that the Invention is to solve>

However, under this method, the user must passively browse a predetermined Web page, which poses a problem of frequent occurrence of a case where the user browses the Web page without developing interest.

The present invention has been conceived to solve the related-art problem and aims at providing an information communications apparatus, a server, and a contents provision method which cause the user to previously ascertain that special, limited disclosure information is included in contents data, thereby fueling the user's willingness to browse, view, or purchase the contents data.

### <Means for Solving the Problem>

An information communications apparatus of the present invention corresponds to an information communications apparatus for acquiring contents data from a server, comprising:
contents analysis means for determining whether or not restricted data whose disclosure is limited are included in the contents data;
contents control means for determining whether or not a condition for disclosing the restricted data is fulfilled when the restricted data are determined to be included; and
notification means for reporting a disclosure status of the restricted data in accordance with a command from the contents control means, wherein
the notification means notifies the disclosure status of the restricted data in accordance with a notification format previously set in the contents data.

By this configuration, the disclosure status of the restricted data whose disclosure is limited is reported to the user, thereby causing the user to ascertain that restricted data are included in the contents data. Thereby, the user comes to have an anticipation for restricted data, thereby fueling the user's willingness to browse, view, or purchase contents data. Moreover, by means of the configuration, a provider of contents data can freely set a notification format for effectively causing the user to ascertain that restricted data are included in contents data.

In the information communications apparatus of the present invention, the notification format is any one of display, vibration, or beeping; and the notification means notifies the disclosure status of the restricted data in accordance with the notification format.

By this configuration, an icon image, the intensity of vibration, or sound readily enables the user to ascertain whether or not restricted data are included in contents data.

In the information communications apparatus, the condition is associated with contents data identical with the contents data including the restricted data; and the contents control means determines whether or not the condition is fulfilled.

By this configuration, the user is notified of the disclosure status of restricted data whose disclosure is limited, thereby causing the user to ascertain that the restricted data are included in the contents data. As a result, the user comes to have an anticipation for restricted data, thereby fueling the user's willingness to browse, view, or purchase the contents data.

In the information communications apparatus, the condition is associated with contents data differing from the contents data including the restricted data; and the contents control means determines whether or not the condition is fulfilled.

By this configuration, the user is notified of the disclosure status of restricted data whose disclosure is limited, thereby causing the user to ascertain that the restricted data are included in the contents data. As a result, the user comes to have an anticipation for restricted data, thereby fueling the user's willingness to browse, view, or purchase the contents data.

Moreover, in the information communications apparatus, the notification means has a configuration for notifying the server that the restricted data are disclosed when the contents control means determines that the condition is fulfilled.

By this configuration, the server can synchronously ascertain the disclosure status of restricted data, and can distribute to an information communications device information about a hint, or the like, for disclosing restricted data whose disclosure rate is low or can distribute the rank of a user, or the like, corresponding to a time elapsed until disclosure of the restricted data.

Moreover, a server of the present invention corresponds to a server for storing contents data, comprising:
contents analysis means for determining whether or not restricted data whose disclosure is limited are included in the contents data;
contents control means for determining whether or not a condition for disclosing the restricted data is fulfilled when the restricted data are determined to be included; and
notification means for reporting a disclosure status of the restricted data in accordance with a command from the contents control means, wherein
the notification means has a configuration for reporting the disclosure status of the restricted data in accordance with a notification format previously set in the contents data.

By this configuration, the user is notified of the disclosure status of restricted data whose disclosure is limited, thereby causing the user to ascertain that the restricted data are included in the contents data. As a result, the user comes to have an anticipation for restricted data, thereby fueling the user's willingness to browse, view, or purchase the contents data. Moreover, by means of the configuration, a provider of contents data can freely set a notification format for effectively causing the user to ascertain that restricted data are included in contents data.

Further, a contents providing method of the present invention corresponds to a contents providing method, comprising:
a contents analysis step of determining whether or not restricted data whose disclosure is limited are included in the contents data;
a contents control step of determining whether or not a condition for disclosing the restricted data is fulfilled when the restricted data are determined to be included; and
a notification step of reporting a disclosure status of the restricted data in accordance with a result of determination rendered in the contents control step, wherein
the notification step is for reporting the disclosure status of the restricted data in accordance with a notification format previously set in the contents data.

By this method, the user is notified of the disclosure status of restricted data whose disclosure is limited, thereby causing the user to ascertain that the restricted data are included in the contents data. As a result, the user comes to have an anticipation for restricted data, thereby fueling the user's willingness to browse, view, or purchase the contents data.

Moreover, in the contents providing method of the present invention, the notification format is any one of display, vibration, or beeping; and the notification step is for reporting the disclosure status of the restricted data in accordance with the notification format.

According to this method, the user can be readily caused to ascertain whether or not contents data include restricted data, by means of an icon image, the intensity of vibration, or sounds.

### <Advantage of the Invention>

The present invention provides an information communications apparatus, a server, and a contents providing method which can previously provide the user with a notification that contents data include restricted data, thereby causing the user to come to have an anticipation for the restricted data and fueling the user's willingness to browse, view, or purchase the contents data.

### <Brief Description of the Drawings>

Fig. 1 is a block diagram showing the configuration of a portable cellular phone 10 according to a first embodiment of the present invention.
Fig. 2 is a view showing a data format of contents data of the first embodiment of the present invention.
Fig. 3 is a flowchart showing processing procedures of the portable cellular phone 10 of the first embodiment of the present invention.
Fig. 4 is a flowchart showing processing procedures of the portable cellular phone 10 of the first embodiment of the present invention.
Fig. 5 is a flowchart showing processing procedures of the portable cellular phone 10 of the first embodiment of the present invention.
Fig. 6 is a view showing disclosure information about contents data A registered in disclosure information management means 50 of the first embodiment of the present invention.
Fig. 7 is a flowchart showing processing procedures of the portable cellular phone 10 of the first embodiment of the present invention.
Fig. 8 is a view showing example screens acquired when contents data are listed in a case where a disclosure status of restricted data is an undisclosed state in the first embodiment of the present invention.
Fig. 9 is a view showing an example screen acquired when contents data A are displayed in a case where a disclosure status of restricted data is an undisclosed state in the first embodiment of the present invention.
Fig. 10 is a view showing disclosure information about the contents data A registered in the disclosure information management means 50 of the first embodiment of the present invention.
Fig. 11 is a view showing example screens acquired when contents data are listed in a case where a disclosure status of restricted data is a disclosed state in the first embodiment of the present invention.
Fig. 12 is a view showing an example screen acquired when contents data A are displayed in a case where a disclosure status of restricted data is a disclosed state in the first embodiment of the present invention.
Fig. 13 is a block diagram showing the configuration of a contents server 100 of a second embodiment of the present invention.
Fig. 14 is a view showing disclosure information about contents data B registered in the disclosure information management means 50 of the second embodiment of the present invention.
Fig. 15 is a view showing disclosure information about the contents data B registered in the disclosure information management means 50 of the second embodiment of the present invention.
Fig. 16 is a view showing disclosure information about contents data C registered in the disclosure information management means 50 of a third embodiment of the present invention.
Fig. 17 is a view showing example screens acquired when contents data are listed in a case where a disclosure status of restricted data is an undisclosed state in the third embodiment of the present invention.
Fig. 18 is a view showing an example screen acquired when the contents data C are displayed in a case where a disclosure status of restricted data is a wholly-undisclosed state in the third embodiment of the present invention.
Fig. 19 is a view showing example screens acquired when the contents data C are displayed in a case where a disclosure status of restricted data is a partially disclosed state in the third embodiment of the present invention.
Fig. 20 is a view showing an example screen acquired when the contents data C are displayed in a case where a disclosure status of restricted data is a wholly-disclosed state in the third embodiment of the present invention.
Fig. 21 is a view showing disclosure information about contents data D registered in the disclosure information management means 50 of the third embodiment of the present invention.
Fig. 22 is a view showing example screens acquired when the disclosure status of restricted data has changed in the third embodiment of the present invention.
Fig. 23 is a view showing disclosure information about contents data E, F, and G registered in the disclosure information management means 50 of the third embodiment of the present invention.
Fig. 24 is a view showing disclosure information about contents data H, I, and J registered in the disclosure information management means 50 of the third embodiment of the present invention.

### <Descriptions of the Reference Numerals>

10 PORTABLE CELLULAR PHONE
20 CONTENTS INPUT MEANS
30 CONTENTS ANALYSIS MEANS
40 CONTENTS CONTROL MEANS
50 DISCLOSURE INFORMATION MANAGEMENT MEANS
60 CONDITION DETECTION MEANS
70 OUTPUT MEANS
80 DISPLAY MEANS
90 COMMUNICATIONS MEANS
100 CONTENTS SERVER
A, B, C, D, E, F, G, H, I, J CONTENTS DATA
R211, R212, R221, R222, R223 RECORDS
R224, R225, R231, R232, R241 RECORDS
R611, R1011, R1411, R1511 RECORDS
R1611, R1612, R1613 RECORDS
R2111, R2112, R2113 RECORDS
R2311, R2321, R2331 RECORDS
R2411, R2413, R2413 RECORDS
R2421, R2422, R2423 RECORDS
R2431, R2432, R2433 RECORDS

### <Best Modes for Implementing the Invention>

Embodiments of the present invention will be described hereunder by reference to the drawings.

### (First Embodiment)

A first embodiment of the present invention will be described by means of taking, as an example, a case where an information communications apparatus is a portable cellular phone.

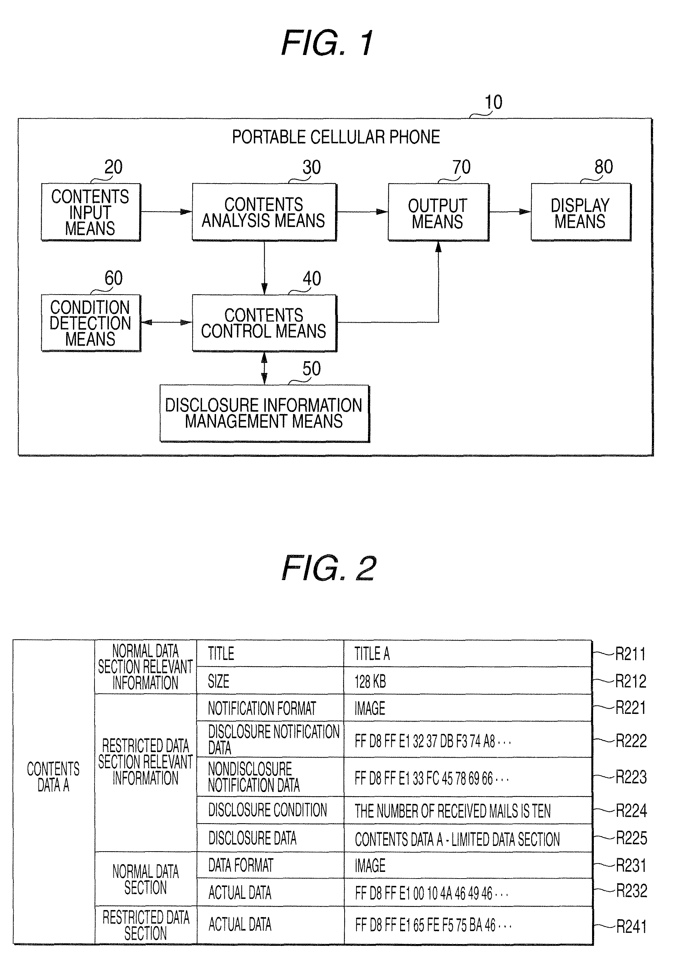

Fig. 1 is a block diagram showing the configuration of a portable cellular phone 10 of the first embodiment of the present invention.

The portable cellular phone 10 comprises contents input means 20, contents analysis means 30, contents control means 40, disclosure information management means 50, condition detection means 60, output means 70, and display means 80.

The contents input means 20 can acquire contents data stored in internal memory (not shown) of the portable cellular phone 10 or data stored in external memory (not shown) such as a memory card; and can also acquire contents data from a server, or the like, by way of a network such as the Internet, an LAN, or the like. The contents input means 20 takes, as an input signal, the contents data acquired from the server or the memory; and transmits the data to the contents analysis means 30.

The contents analysis means 30 analyzes specifics of a received input signal from the contents input means 20; and can extract, from the contents data, relevant information, such as conditions for disclosure, a notification format, and the like, associated with restricted data whose disclosure is limited.

The contents control means 40 can transmit to and register in the disclosure information management means 50 disclosure information, such as the disclosure condition extracted by the contents analysis means 30 or the like, in the form of a registration request signal. Moreover, the contents control means 40 transmits the disclosure condition included in disclosure information to the condition detection means 60 as a condition setting signal, thereby being able to request monitoring whether or not the disclosure condition has been fulfilled. Upon receipt, from the condition detection means 60, of a condition result signal showing that the disclosure condition has been fulfilled, the contents control means 40 can transmit an update request signal to the disclosure information management means 50 and update the disclosure information registered in the disclosure information management means 50. The contents control means 40 can transmit a disclosure status notification signal to the output means 70 in accordance with the disclosure status registered in the disclosure information management means 50.

Upon receipt of a registration request signal from the contents control means 40, the disclosure information management means 50 can store disclosure information included in the registered request signal. Moreover, upon receipt of an update request signal from the contents control means 40, the disclosure information management means 50 can update a stored disclosure status in accordance with specifics of the update request signal.

Upon receipt of a condition setting signal from the contents control means 40, the condition detection means 60 monitors a disclosure condition included in the condition setting signal. When the disclosure condition is fulfilled, the condition detection means 60 transmits the condition result signal to the contents control means 40.

Pursuant to a notification format of the restricted data and notification data received from the contents analysis means 30 and specifics of a received disclosure status notification signal from the contents control means 40, the output means 70 transmits to the display means 80 a notification signal indicating enable disclosure or disable disclosure.

The display means 80 is one of notification means, and can indicate whether or not the restricted data included in contents data are disclosed, by means of displaying disclosure enabled or disclosure disabled in accordance with specifics of a received report signal from the output means 70. The notification means is described herein by means of taking the display means 80 as an example. However, the notification means is not limited to the display means. A determination as to whether or not restricted data included in contents data are disclosed may also be indicated by vibration means or beeping means.

Fig. 2 shows an example data format of contents data of the first embodiment of the present invention.

As illustrated, the contents data A comprise normal data section relevant information, restricted data section relevant information, a normal data section, and a restricted data section.

The normal data section relevant information comprises a record R211 and a record R212.

The record R211 shows the title of the contents data A which is displayed when contents data are listed on the portable cellular phone 10.

The record R212 shows the size of the contents data A.

Next, the restricted data section relevant information comprises records R221 to R225.

The record R221 shows a format indicating that the restricted data are included in the contents data. A format indicating inclusion of restricted data by displaying an image of an icon or the like is set herein. However, the format is not limited to this format. The user may also be notified of inclusion of restricted data, by means of the intensity of vibration, a vibration cycle, blinking or changes in brightness of an LED, an LCD, or the like, or a beep from a speaker.

The record R222 shows disclosure notification data for indicating that the restricted data are disclosed. Actual data pertaining to an icon showing disclosure of restricted data are assumed to be stored herein.

The record R223 shows nondisclosure notification data to be indicated when restricted data are not disclosed. Actual data pertaining to an icon showing that restricted data are not disclosed are assumed to be stored in the record.

The record R224 shows disclosure conditions for disclosing restricted data. When the number of mails received has reached 10 times, the record is assumed to be specified so as to disclose restricted data. Conditions for disclosure are not limited to the number of mails that have been received. The conditions for disclosure can assume the form of various types of pieces of information relevant to a portable cellular phone, such as the number of mail that have been transmitted, the number of voice calls that have arrived, the number of voice calls that have been originated, the number of telephone numbers registered in a telephone directory, the state of a radio wave, a battery level, date-and-time information, or the like; license information relevant to contents data; or the like.

The record R225 shows disclosure data disclosed when the disclosure condition has been fulfilled. Here, the record is specified so as to disclose the restricted data of the contents data A when the disclosure conditions shown in the record R224 are fulfilled.

The normal data section comprises records R231 and R232.

The record R231 shows a data format of the contents data A. Although herein an image is specified as a data format, the data format is not limited to the image. As a matter of course, a data format, such as text, a movie, music, or the like, may also be acceptable.

The record R232 shows actual data to be output when restricted data of the contents data A are not disclosed or when the contents data A do not include restricted data.

Next, the restricted data section comprises the record R241.

The record R241 shows actual data to be output when restricted data of the contents data A are disclosed. The expression "disclosure of the restricted data" used herein signifies that an area whose display or reproduction is impeded in normal data or new additional information not acquired in normal data is provided by means of displaying restricted data of an image format or a text format, reproducing restricted data of a music format or a movie format, or the like.

Although herein actual data of restricted data are specified directly in the record R241, the information that is to be specified for the record is not limited to the actual data. An URL showing a target area from which restricted data are to be acquired may be specified in the record R241. When the disclosure conditions are fulfilled, restricted data may be acquired at the specified URL.

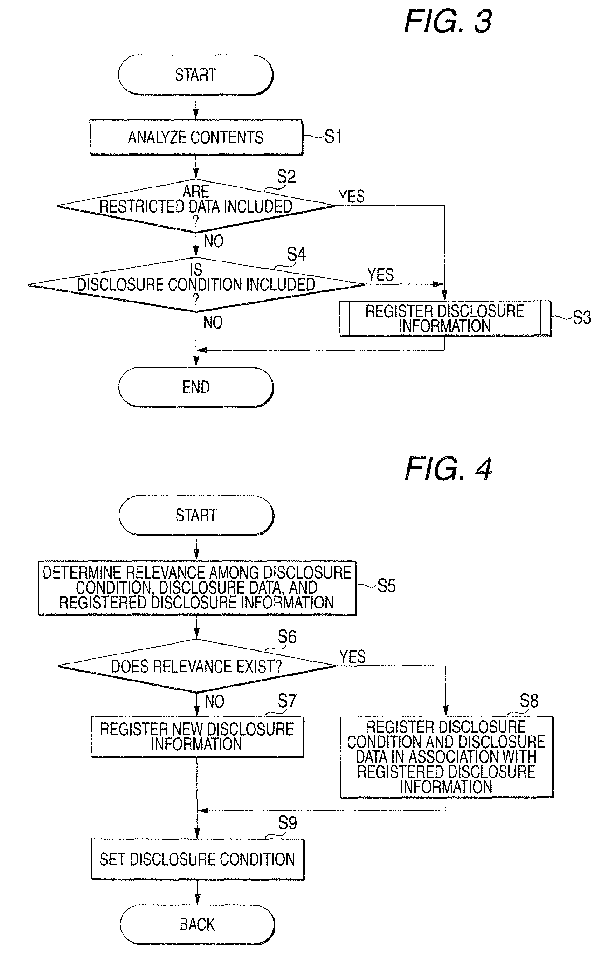

Figs. 3 and 4 show flowcharts showing processing procedures acquired when contents data are stored in the portable cellular phone 10 of the first embodiment of the present invention.

In Fig. 3, the contents input means 20 commences processing when the contents data acquired from the server or the like are stored in the internal memory.

Upon having commenced processing, the contents input means 20 acquires the contents data from the internal memory, and transmits the thus-acquired contents data to the contents analysis means 30 as an input signal (step S1).

Next, the contents analysis means 30 analyzes specifics of the input signal, thereby determining whether or not restricted data are included in the contents data (step S2).

When the restricted data are included in the contents data (Yes in step S2), the disclosure condition R224 and the disclosure data R225 among pieces of restricted data relevant information of the contents data are transmitted as a registration request signal to the contents control means 40 (step S3).

Meanwhile, when the restricted data are not included in the contents data (No in step S2), the contents analysis means 30 determines whether or not disclosure conditions are included in the contents data (step S4).

When disclosure conditions are included in the contents data (Yes in step S4), the contents analysis means 30 sends, as a registration request signal, the disclosure conditions R224 and the disclosure data R225 among pieces of restricted data relevant information of the contents data to the contents control means 40 (step S3).

Meanwhile, when disclosure conditions are not included in the contents data (No in step S4), processing is terminated.

In Fig. 4, upon receipt of the registration request signal from the contents analysis means 30, the contents control means 40 commences processing.

Upon having commenced processing, the contents control means 40 determines relevance between the disclosure conditions R224, and the disclosure data R225 included in the registration request signal and specifics already registered in the disclosure information management means 50 (step S5).

When no relevance is determined to exist between the specifics included in the registration request signal and the specifics already registered in the disclosure information management means 50 (No in step S6), the contents control means 40 transmits the registration request signal to the disclosure information management means 50, thereby newly registering the disclosure condition R224, the disclosure data R225, a cleared state of the disclosure condition, and a disclosed state of disclosure data (step S7).

Meanwhile, when relevance exists between the specifics of the restricted data section relevant information included in the registration request signal and the specifics already registered in the disclosure information management means 50 (Yes in step S6), the contents control means 40 transmits the registration request signal to the disclosure information management means 50, thereby registering the disclosure condition R224, the disclosure data R225, the cleared state of the disclosure condition, and the disclosed state of the disclosure data in association with the already-registered specifics (step S8).

The contents control means 40 sends, as a condition setting signal, the disclosure conditions R224 of the control data section relevant information to the condition detection means 60 (step S9).

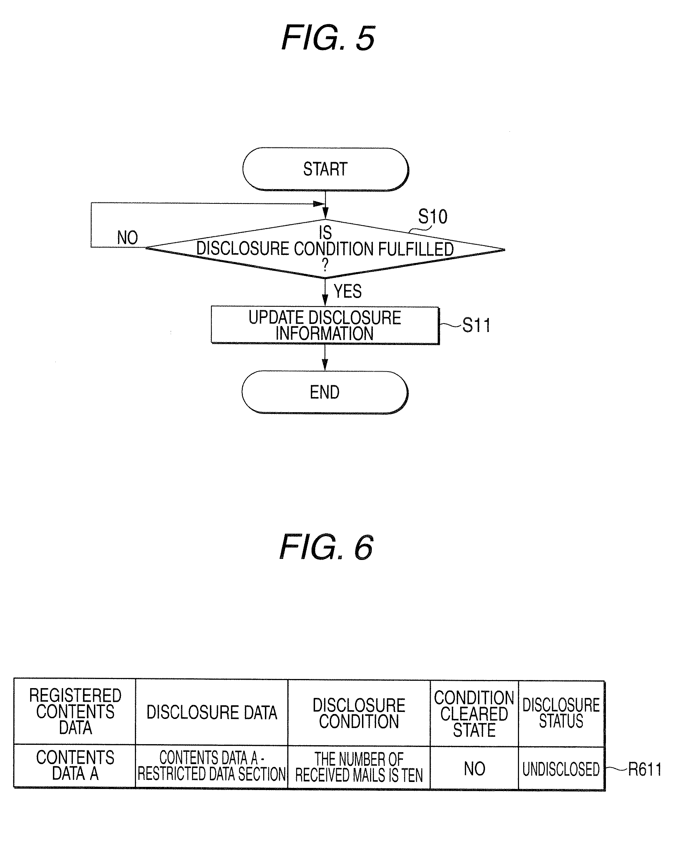

Fig. 5 is a flowchart showing processing procedures employed after setting of a condition in the first embodiment of the present invention.

In Fig. 5, upon receipt of the condition setting signal, the condition detection means 60 commences processing, to thus monitor whether or not the disclosure condition for the restricted data included in the condition setting signal is fulfilled (step S10).

Upon detection of the disclosure condition included in the condition setting signal being fulfilled (Yes in step S10), the condition detection means 60 sends to the contents control means 40 a condition result signal showing that the disclosure condition has been fulfilled. The contents control means 40 having received the condition result signal showing fulfillment of the disclosure condition sends an update request signal to the disclosure information management means 50, thereby updating registered specifics (step S11). The contents control means 40 terminates processing after having updated the registered specifics of the disclosure information management means 50.

Meanwhile, when the disclosure condition included in the condition setting means has not been fulfilled (No in step S10), the condition detection means 60 again monitors whether or not the disclosure condition is fulfilled.

The previously-described flowchart is described by means of taking, as an example, a case where the contents data shown in Figs. 3 through 5 correspond to the contents data A shown in Fig. 2

Upon commencing processing, the contents input means 20 acquires the contents data A from the internal memory, and sends the thus-acquired contents data A as an input signal to the contents analysis means 30.

Upon receipt of the input signal, the contents analysis means 30 analyzes specifics of the contents data A (step S1), thereby determining whether or not the restricted data are included (step S2). Since the restricted data are included in the contents data A (Yes in step S2), the disclosure conditions R224 and the disclosure data R225 of the contents data A are transmitted as a registration request signal to the contents control means 40 (step S3).

Upon receipt of the registration request signal from the contents analysis means 30, the contents control means 40 determines relevance between the specifics already registered in the disclosure information management means 50 and the received registration request signal (step S5). Herein, when nothing is assumed to be registered in the disclosure information management means 50 (No in step S6), the disclosure information management means 50 newly registers the disclosure conditions R224 and the disclosure data R225 of the contents data A, the cleared state of the disclosure conditions, and the disclosed state of the disclosure data (step S7).

Next, the contents control means 40 transmits to the condition detection means 60, as a condition set signal, the disclosure conditions R224 (receiving 10 mails) of the control data section relevant information. As a result, the condition detection means 60 monitors whether the number of mails received has reached 10 (step S9).

Fig. 6 is a view showing disclosure information of the contents data A registered in the disclosure information management means 50.

Disclosure data, a disclosure condition, the cleared state of the disclosure condition, and the disclosed state of the disclosure data are registered in the disclosure information management means 50.

The cleared state of the disclosure condition and the disclosed state of the disclosure data remain unchanged until the number of received mails has reached 10, and can be updated by receipt of an update request signal from the contents control means 40.

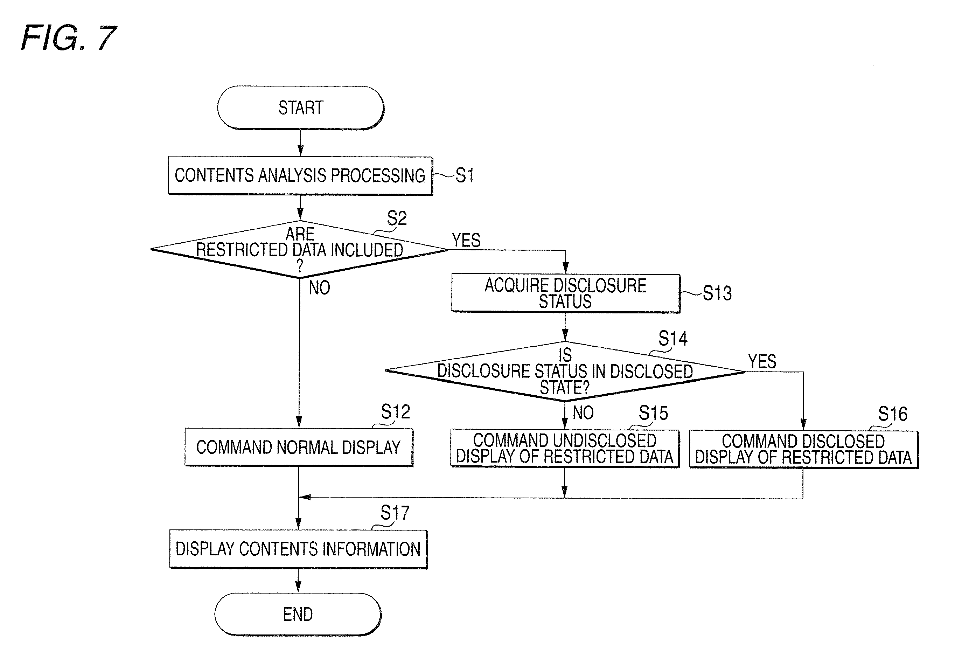

Fig. 7 is a flowchart showing processing procedures employed when contents data are listed in the portable cellular phone 10 of the first embodiment in the present invention.

In Fig. 7, the contents input means 20 commences processing upon receipt of a command for listing contents data.

Upon commencing processing, the contents input means 20 sequentially acquires contents data from the internal memory, and transmits the thus-acquired contents data as an input signal to the contents analysis means 30 (step S1).

Next, the contents analysis means 30 analyzes specifics of the input signal, to thus determine whether or not restricted data are included in the contents data (step S2). The contents analysis means 30 analyzes the specifics of the input signal; extracts a title R211 of the contents data, a notification format R221 of restricted data, disclosure notification data R222, and nondisclosure notification data R223; and transmits the thus-extracted data to the output means 70.

When no restricted data are included in the contents data (No in step S2), the contents analysis means 30 transmits a normal display command signal to the output means 70 (step S12).

Meanwhile, when restricted data are included in the contents data (Yes in step S2), the contents analysis means 30 transmits a disclosure control signal to the contents control means 40. Upon receipt of the disclosure control signal, the contents disclosure means 40 transmits a disclosure status acquisition signal to the disclosure information management means 60, thereby acquiring the disclosed state of the restricted data (step S13).

When the acquired disclosure status shows an undisclosed state (No in step S14), the contents control means 40 transmits to the output means 70 a disclosure status notification signal showing that the disclosure status of the restricted data is an undisclosed state (step S15).

Meanwhile, when the acquired disclosure status shows a disclosed state (Yes in step S14), the contents control means 40 transmits to the output means 70 a disclosure status notification signal showing that the disclosure status of the restricted data is a disclosed state (step S16).

Upon receipt of the normal display command signal from the contents analysis means 30, the output means 70 transmits to the display means 80 only the title R211 of the contents data as a notification signal. Moreover, upon receipt, from the contents control means 40, of the disclosure status notification signal showing that the disclosure status of the restricted data is an undisclosed state, the output means 70 transmits to the display means 80, as a notification signal, the title R211 of the contents data, the notification format R221 of the restricted data, and the nondisclosure notification data R223. Upon receipt, from the contents control means 40, of the disclosure status notification signal showing that the disclosure status of the restricted data is a disclosed state, the output means 70 transmits to the display means 80, as a notification signal, the title R211 of the contents data, the notification format R221 of the restricted data, and the disclosure notification data R222.

Pursuant to the specifics of the received notification signal from the output means 70, the display means 80 performs displaying (step S17), and processing is terminated.

Processing procedures employed when contents data are listed will be described by means of taking, as an example, a case where the disclosure information of the contents data A shown in Fig. 6 is already registered in the disclosure information management means 50.

Upon receipt of a command for listing contents data, the contents input means 20 commences processing, to thus acquire contents data A from the internal memory, and transmits the thus-acquired contents data A as an input signal to the contents analysis means 30.

Next, the contents analysis means 30 analyzes specifics of the input signal (step S1), to thus determine whether or not the restricted data are included in the contents data A (step S2). Since the restricted data are included in the contents data A (Yes in step S2), the contents analysis means 30 transmits a disclosure control signal to the contents control means 40. Moreover, the contents analysis means 30 analyzes the specifics of the input signal, and transmits to the output means 70 the title R211 of the contents data A, the notification format R221 of the restricted data, the disclosure notification data R222, and the nondisclosure notification data R223.

Upon receipt of the disclosure control signal, the contents control means 40 transmits a disclosure status acquisition signal to the disclosure information management means 50, thereby acquiring a disclosed state of the restricted data in the contents data A (step S13). Since the disclosure status of the restricted data is an undisclosed state herein (No in step S14), the contents control means 40 transmits to the output means 70 a disclosure status notification signal showing that the disclosure status of the restricted data is an undisclosed state (step S15).

Upon receipt, from the contents control means 40, of the disclosure status notification signal showing that the disclosure status of the restricted data is an undisclosed state, the output means 70 transmits to the display means 80, as a notification signal, the title R211 of the contents data A, the notification format R221 of the restricted data, and the nondisclosure notification data R223.

Pursuant to specifics of the received notification signal from the output means 70, the display means 80 displays the title of the contents data A and the nondisclosure notification data R223 of an image format designated by the notification format R221 (step S17), and processing is terminated.

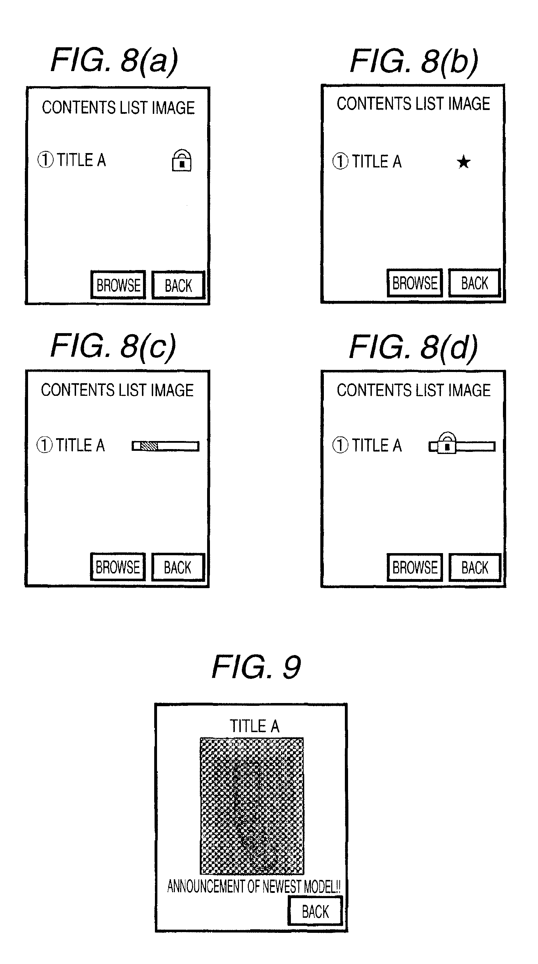

Figs. 8(a) to 8(d) show example screens appearing in a case where contents data are listed when the disclosure status of the restricted data included in the contents data A is an undisclosed state.

Fig. 8(a) shows an example screen appearing when image data pertaining to a key-shaped icon are set as nondisclosure notification data in the contents data A. Since the image data pertaining to the key-shaped icon are closed, there is given a notification that the disclosure status of the restricted data is an undisclosed state.

Fig. 8(b) shows an example screen appearing when image data pertaining to a star-shaped icon are set as nondisclosure notification data in the contents data A. Since the image data pertaining to the star-shaped icon are opaque, there is given a notification that the disclosure status of the restricted data is an undisclosed state.

Fig. 8(c) shows an example screen appearing when image data showing that disclosure of a portion of the contents data A is limited are set as nondisclosure notification data. The color, or the like, of an area which whose disclosure is limited is changed, to thus indicate that a portion of restricted data is undisclosed. This is particularly effective for a case where a limitation is imposed on disclosure of a specific playback position in music data, motion picture data, or the like.

Fig. 8(d) shows an example screen appearing when image data showing disclosure a portion of the contents data A being limited are set as nondisclosure notification data. As in the case of Fig. 8(c), this is effective for a case where a limitation is imposed on disclosure of a specific playback position in music data, motion picture data, or the like.

Processing procedures employed when the contents data A are displayed from the list of contents data shown in Figs. 8(a) to 8(d) will now be described by reference to the flowchart shown in Fig. 7.

The contents input means 20 starts processing upon receipt of a command for displaying contents data; acquires the contents data A from the internal memory; and transmits the thus-acquired contents data A as an input signal to the contents analysis means 30.

Next, the contents analysis means 30 analyzes specifics of an input signal (step S1), and determines whether or not the restricted data are included in the contents data A (step S2). Since the restricted data are included in the contents data A (Yes in step S2), the contents analysis means 30 transmits a disclosure control signal to the contents control means 40. Moreover, the contents analysis means 30 analyzes specifics of the input signal, and transmits to the output means 70 the data format R231 and the actual data R232 included in the normal data section of the contents data A and the actual data R241 included in the restricted data section.

Upon receipt of the disclosure control signal, the contents control means 40 transmits a disclosure status acquisition signal to the disclosure information management means 60, and acquires the disclosure status of the restricted data in the contents data A (step S13). Since the disclosure status of the restricted data is an undisclosed state (No in step S14), the contents control means 40 transmits to the output means 70 a disclosure status notification signal showing that the disclosure status of the restricted data is an undisclosed state (step S15).

Upon receipt, from the contents control means 40, of the disclosure status notification signal showing that the disclosure status of the restricted data is an undisclosed state, the output means 70 transmits to the display means 80, as a notification signal, the data format R231 and the actual data R232 included in the normal data section of the contents data A.

Pursuant to specifics of the received notification signal from the output means 70, the display means 80 displays the actual data R241 included in the normal data section according to the image format specified by the data format R231 (step S17), and processing is terminated.

Fig. 9 shows an example screen acquired in a case where the contents data A are displayed when the disclosure status of the restricted data included in the contents data A is an undisclosed state.

Since the disclosure status of the restricted data is an undisclosed state, browsing the contents data A of the image format is limited.

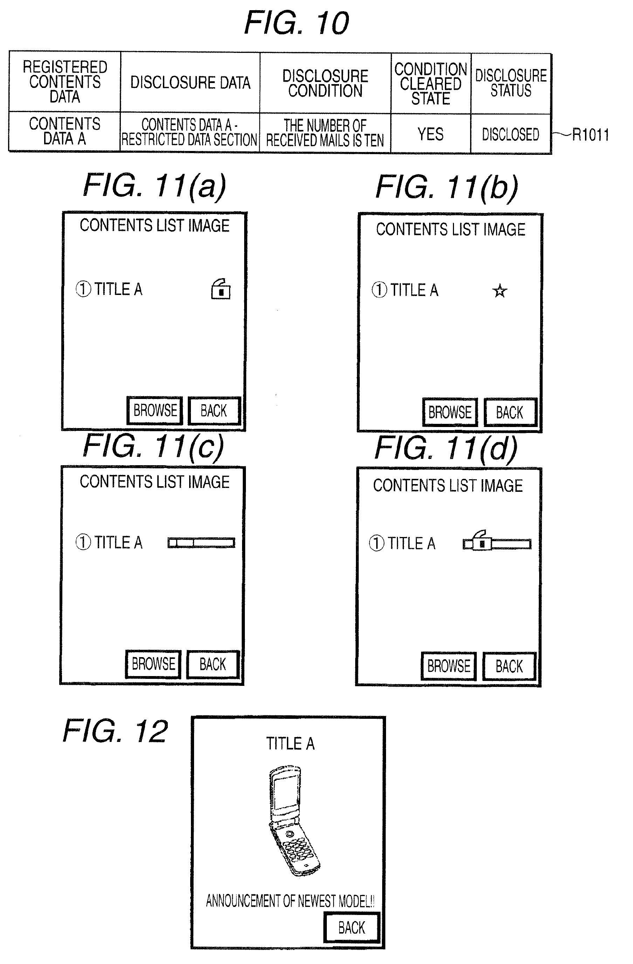

Fig. 10 is a view showing disclosure information of the contents data A registered in the disclosure information management means 50 when the condition detection means 60 has detected that the disclosure conditions R224 are fulfilled.

When the number of received mails has reached 10, the contents control means 40 receives a condition result signal from the condition detection means 60, and transmits an update request signal to the disclosure information management means 50, thereby updating the cleared state of the disclosure condition and the disclosure status of the disclosure data.

By reference to the flowchart shown in Fig. 7, there will now be described processing procedures employed when contents data are listed in a case where the disclosure information of the contents data A shown in Fig. 10 is registered in the disclosure information management means 50. Explanation of previously-described processing, such as analysis of contents or the like, is omitted.

The contents control means 40 acquires the disclosure status of the restricted data (step S13). Since the acquired disclosure status is a disclosed state (Yes in step S14), a disclosure status notification signal showing that the disclosure status of the restricted data is a disclosed state is transmitted to the output means 70 (step S16).

Upon receipt, from the contents control means 40, of the disclosure status notification signal showing that the disclosure status of the restricted data is a disclosed state, the output means 70 transmits to the display means 80, as a notification signal, the title R211 of the contents data A, the notification format R221 of the restricted data, and the disclosure notification data R222.

Pursuant to specifics of the received notification signal from the output means 70, the display means 80 displays the title of the contents data A and the disclosure notification data R222 of the image format designated by the notification format R221 (step S17).

Figs. 11 (a) to 11 (d) show example screens appearing in a case where contents data are listed when the disclosure status of the restricted data included in the contents data A is a disclosed state.

Fig. 11 (a) shows an example screen appearing when image data pertaining to a key-shaped icon are set as disclosure notification data in the contents data A. Since the image data pertaining to the key-shaped icon is open, there is given a notification that the disclosure status of the restricted data is a disclosed state.

Fig. 11 (b) shows an example screen appearing when image data pertaining to a star-shaped icon are set as disclosure notification data in the contents data A. Since the image data pertaining to the star-shaped icon are displayed as not being opaque, there is given a notification that the disclosure status of the restricted data is a disclosed state.

Fig. 11(c) shows an example screen appearing when image data showing a limitation on a portion of the contents data A being removed are set as disclosure notification data. The color, or the like, of an area whose limitation is removed is changed, to thus indicate that a portion of restricted data is disclosed. This is particularly effective for a case where disclosure of a specific playback position in music data, motion picture data, or the like, is allowed.

Fig. 11 (d) shows an example screen appearing when image data showing a limitation on a portion of the contents data A being removed are set as disclosure notification data. As in the case of Fig. 11 (c), this is effective for a case where disclosure of a specific playback position in music data, motion picture data, or the like is allowed.

Processing procedures employed when the contents data A are displayed from the list of contents data shown in Figs. 11 (a) to 11(d) will now be described by reference to the flowchart shown in Fig. 7. Explanations of previously-described processing, such as analysis of contents, or the like, are omitted.

The contents control means 40 acquires the disclosure status of the restricted data (step S13). Since the disclosure status of the restricted data is a disclosed state (Yes in step S14), the contents control means 40 transmits to the output means 70 a disclosure status notification signal showing that the disclosure status of the restricted data is a disclosed state (step S16).

Upon receipt, from the contents control means 40, of the disclosure status notification signal showing that the disclosure status of the restricted data is a disclosed state, the output means 70 transmits to the display means 80 the data format R231 included in the normal data section of the contents data A and the actual data R241 included in the restricted data section as a notification signal.

Pursuant to specifics of the received notification signal from the output means 70, the display means 80 displays the actual data R241 included in the restricted data section according to the image format specified by the data format R231 (step S17).

Fig. 12 shows an example screen acquired in a case where the contents data A are displayed when the disclosure status of the restricted data included in the contents data A is a disclosed state.

Since the disclosure status of the restricted data is a disclosed state, all of contents of the contents data A of the image format can be browsed.

As mentioned above, according to the portable cellular phone 10 of the first embodiment, the contents control means 40 controls specifics to be reported to the display means 80 by the output means 70, in accordance with the disclosure status of the restricted data included in the contents data. Thereby, at the time of listing of contents, the user can previous ascertain that restricted data are included in contents data; the user can have a sense of anticipation of the restricted data; and the user's willingness to browse, view, or purchase the contents data can be fueled.

### (Second Embodiment)

A second embodiment of the present invention will be described by means of taking, as an example, a case where a contents server distributes contents data.

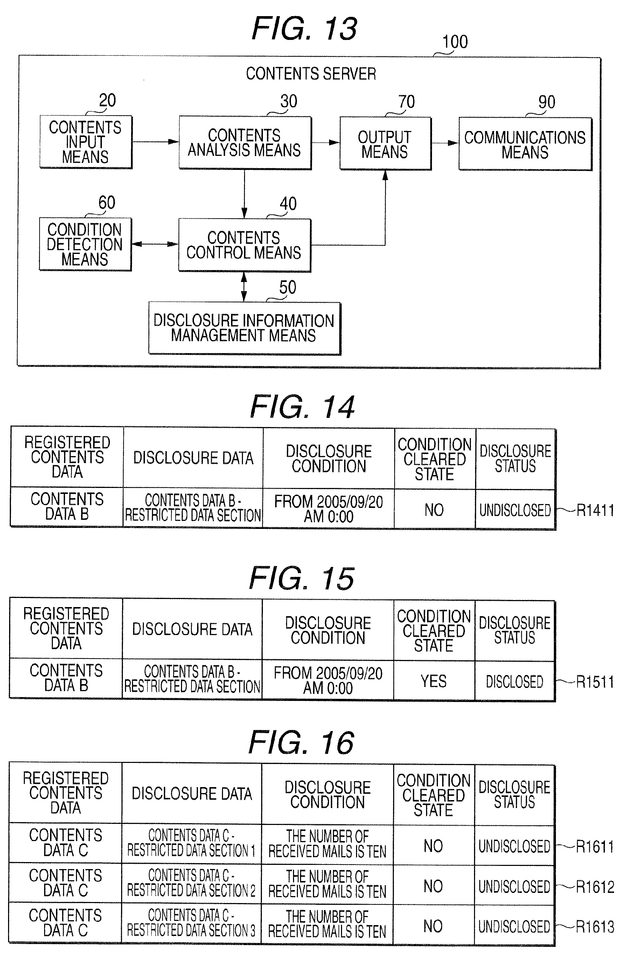

Fig. 13 is a block diagram showing the configuration of a contents server 100 of the second embodiment of the present invention. Elements of the server that are similar to those described in connection with the first embodiment are assigned the same reference numerals, and their repeated explanations are omitted.

The contents server 100 comprises contents input means 20, contents analysis means 30, contents control means 40, disclosure information management means 50, condition detection means 60, output means 70, and communications means 90.

The communications means 90 can distribute contents data to a portable cellular phone, or the like, by way of a network such as the Internet, a LAN, or the like.

Fig. 14 is a view showing disclosure information of contents data B registered in the disclosure information management means 50 of the contents server 100 of the second embodiment of the present invention.

0:00 am of September 20, 2005 and a subsequent time are set as a condition for disclosing the contents data B. Date-and-time information retained by the contents server 100 is assumed to be September 19, 2005; a number is assumed to be set in the cleared state of the disclosure condition; and nondisclosure is assumed to be set as the disclosure status of restricted data.

By reference to the flowchart shown in Fig. 7, processing procedures employed when contents data are listed will now be described by means of taking, as an example, a case where the disclosure information of the contents data B shown in Fig. 14 is registered in the disclosure information management means 50.

Upon receipt, from a portable cellular phone or the like, of a command request for listing contents data, the contents input means 20 starts processing; acquires the contents data B from the internal memory; and transmits the thus-acquired contents data B to the contents analysis means 30 as an input signal.

Next, the contents analysis means 30 analyzes specifics of an input signal (step S1), and determines whether or not the restricted data are included in the contents data B (step S2). Since the restricted data are included in the contents data B (Yes in step S2), the contents analysis means 30 transmits a disclosure control signal to the contents control means 40. Moreover, the contents analysis means 30 analyzes specifics of the input signal, and transmits to the output means 70 the title R211 of the contents data B, the notification format R221 of the restricted data, the disclosure notification data R222, and the nondisclosure notification data R223.

Upon receipt of the disclosure control signal, the contents control means 40 transmits a disclosure status acquisition signal to the disclosure information management means 60, and acquires the disclosure status of the restricted data in the contents data B (step S13). Since the disclosure status of the restricted data is an undisclosed state (No in step S14), the contents control means 40 transmits to the output means 70 a disclosure status notification signal showing that the disclosure status of the restricted data is an undisclosed state (step S15).

Upon receipt, from the contents control means 40, of the disclosure status notification signal showing that the disclosure status of the restricted data is an undisclosed state, the output means 70 transmits, as a notification signal, to the communications means 90 the title R211 of the contents data B, the notification format R221 of restricted data, and nondisclosure notification data R223.

Pursuant to specifics of the received notification signal from the output means 70, the communications means 90 distributes the title of the contents data B and the nondisclosure notification data R223 of an image format designated to the notification format R221 in an HTML format, or the like, by way of the network (step S17).

Fig. 15 is a view showing disclosure information of the contents data B registered in the disclosure information management means 50 when the condition detection means 60 has detected that the disclosure condition R224 is fulfilled.

When the date-and-time information retained by the contents server 100 has passed 0:00 am of September 20, 2005, the contents control means 40 receives a condition result signal from the condition detection means 60, and transmits an update request signal to the disclosure information management means 50, thereby updating the cleared state of the disclosure condition and the disclosure status of the disclosure data.

When the disclosure information of the contents data B shown in Fig. 15 is registered in the disclosure information management means 50, processing procedures performed when contents data are listed will now be described. Explanations of previously-described processing, such as analysis of contents, or the like, are omitted.

The contents control means 40 acquires the disclosure status of the restricted data (step S13). Since the disclosure status of the restricted data is a disclosed state (Yes in step S14), the contents control means 40 transmits to the output means 70 a disclosure status notification signal showing that the disclosure status of the restricted data is a disclosed state (step S16).

Upon receipt, from the contents control means 40, of the disclosure status notification signal showing that the disclosure status of the restricted data is a disclosed state, the output means 70 transmits to the communications means 90 the title R211 of the contents data B, the notification format R221 of the restricted data, and the disclosure notification data R222 as a notification signal.

Pursuant to specifics of the received notification signal from the output means 70, the communications means 90 distributes the title of the contents data B and the disclosure notification data R222 of an image format designated to the notification format R221 in an HTML format, or the like, by way of the network (step S17).

As mentioned above, according to the contents server 100 of the second embodiment, the contents control means 40 controls specifics to be reported to the communications means 80 by the output means 70, in accordance with the disclosure status of the restricted data included in the contents data. Thereby, before acquisition of contents data, the user can previously ascertain that restricted data are included in contents data; the user can have a sense of anticipation of the restricted data; and the user's willingness to browse, view, or purchase the contents data can be fueled.

The contents server 100 of the second embodiment can perform distribution in accordance with the disclosure status of the restricted data as in the case of the first embodiment even when the display of contents data is requested by way of a portable cellular phone or the like, and can list the contents data.

The contents server 100 of the second embodiment may acquire the status of the terminal requesting listing of contents or displaying of contents data, such as a portable cellular phone or the like, thereby determining the cleared state of the disclosure condition.

### (Third Embodiment)

A third embodiment of the present invention will be described by means of taking, by way of an example, a case where a plurality of sets of restricted data are included in a single set of contents data registered in the portable cellular phone 10 or the contents server 100.

Fig. 16 is a view showing disclosure information of the contents data C registered in the portable cellular phone 10 or the disclosure information management means 50 in the contents server 100 of the third embodiment of the present invention.

Three sets of restricted data are included in the contents data C, and disclosure conditions for disclosing the respective sets of restricted data are set.

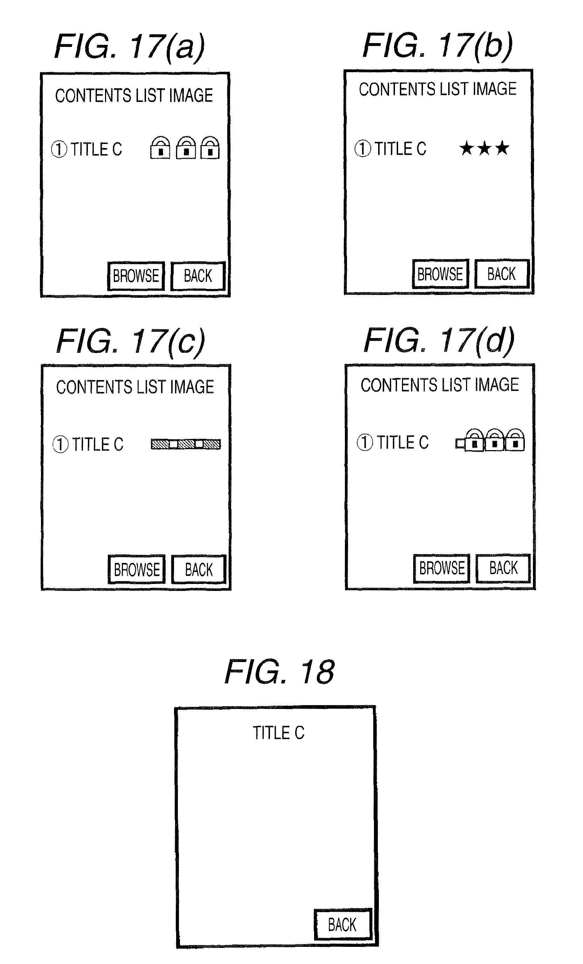

Figs. 17(a) to 17(d) are example screens appearing in a case where listing of contents data is commanded when the disclosure state of the three sets of restricted data included in the contents data C is an undisclosed state.

Fig. 17(a) shows an example screen appearing when image data pertaining to the key-shaped icon are set as nondisclosure notification data in the contents data C. The image data pertaining to the key-shaped icon are displayed in equal number to the restricted data, thereby indicating that the disclosure status of the restricted data is an undisclosed state. When the disclosure status of one set of restricted data is updated to a disclosed state, disclosure notification data corresponding to the restricted data (e.g., image data pertaining to a key-shaped icon showing an opened key) are displayed.

Fig. 17(b) shows an example screen appearing when the image data pertaining to a star-shaped icon are set in the contents data C as nondisclosure notification data. The image data pertaining to the star-shaped icon are displayed in equal number to the restricted data, thereby indicating that the disclosure status of the restricted data is an undisclosed state. When the disclosure status of one set of restricted data is updated to a disclosed state, disclosure notification data corresponding to the restricted data (e.g., image data pertaining to an outlined star-shaped icon) are displayed.

Fig. 17(c) shows an example screen appearing when the image data-showing that disclosure of a portion of the contents data C is limited-are set as nondisclosure notification data. The color, or the like, of three areas whose disclosure is limited is changed, thereby notifying that a portion of the restricted data is undisclosed. When the disclosure status of one set of restricted data is updated to a disclosed state, disclosure notification data (e.g., image data whose color or the like has been changed) corresponding to the restricted data are displayed.

Fig. 17(d) shows an example screen appearing when the image data of the contents data C showing that disclosure of a portion thereof is limited are set as nondisclosure notification data. As in the case of Fig. 17(c), this is effective for a case where disclosure of a specific playback position in music data, motion picture data, or the like, is limited. When the disclosure status of one set of the restricted data is updated to a disclosed state, the disclosure notification data (e.g., image data pertaining to a key-shaped icon showing an open key) corresponding to the restricted data are displayed.

Fig. 18 shows an example screen appearing when the contents data C are displayed from the list of contents data shown in Figs. 17(a) to 17(d).

As illustrated, since all of the disclosure statuses of the three sets of restricted data correspond to an undisclosed state, the image data of the contents data C are assumed not to be displayed at all.

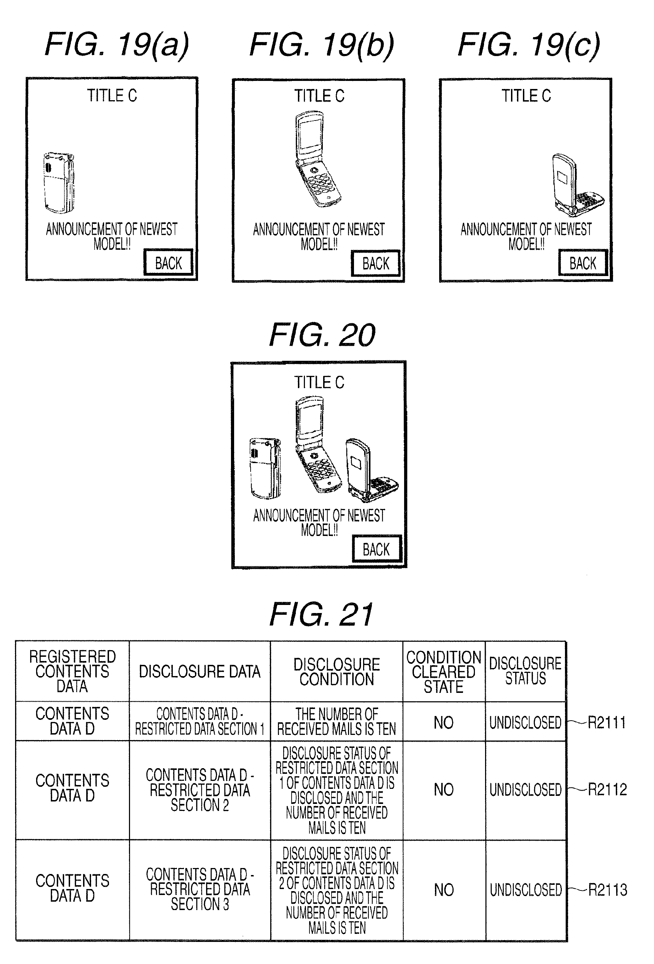

Figs. 19(a) to 19(c) show example displays of the contents data C corresponding to the disclosure states of the three sets of restricted data.

Fig. 19(a) shows an example display of the contents data C appearing when a restricted data section 1 of the three sets of restricted data is disclosed.

When a disclosure condition corresponding to the restricted data section 1 is fulfilled, image data corresponding to actual data of the restricted data section 1 are displayed in a leftward position with reference to a screen center.

Fig. 19(b) shows an example display of the contents data C appearing when a restricted data section 2 of the three sets of restricted data is disclosed.

When a disclosure condition corresponding to the restricted data section 2 is fulfilled, image data corresponding to actual data of the restricted data section 2 are displayed in the screen center.

Fig. 19(c) shows an example display of the contents data C appearing when a restricted data section 3 of the three sets of restricted data is disclosed.

When a disclosure condition corresponding to the restricted data section 3 is fulfilled, image data corresponding to actual data of the restricted data section 3 are displayed in a rightward position with reference to the screen center.

Fig. 20 shows an example display of the contents data C appearing when all of the disclosure conditions for the restricted data sections 1 to 3 are fulfilled, showing all of the image data corresponding to the actual data of the restricted data sections 1 to 3.

As shown in Fig. 21, the disclosure conditions may also be associated with the disclosure status of restricted data in the same contents data. As shown in, e.g., Fig. 21, since disclosure of the restricted data section 1 is a condition for disclosing the restricted data section 2 or disclosure of the restricted data section 2 is a condition for disclosing the restricted data section 3, the sequence of disclosure of the restricted data can be controlled.

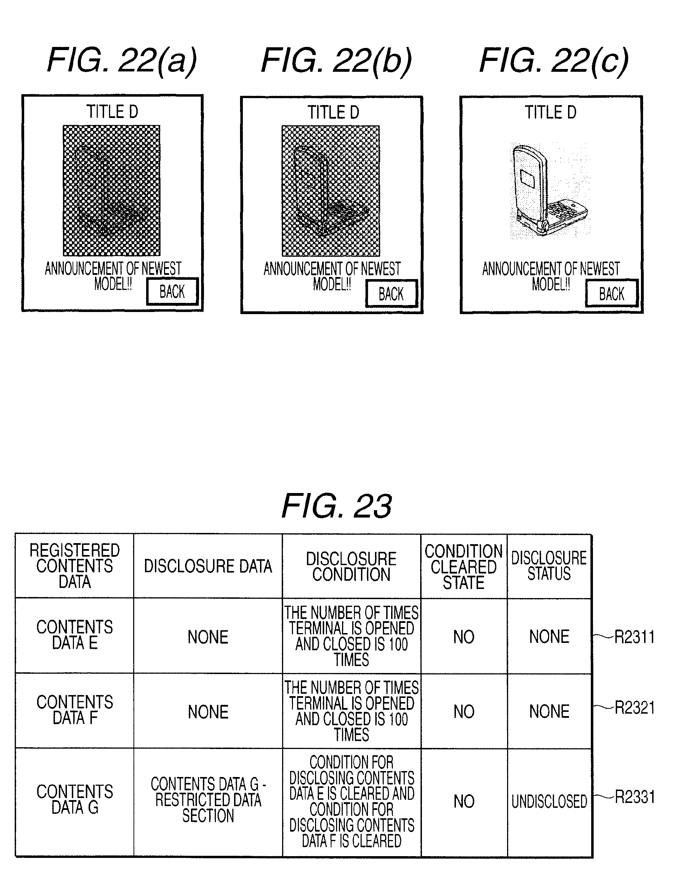

Figs. 22(a) to 22(c) show example screens showing changes in a display corresponding to the disclosure status of the three sets of restricted data of contents data D shown in Fig. 21.

Fig. 22(a) shows an example display of the contents data D appearing when a restricted data section 1 is disclosed.

Fig. 22(b) shows an example display of the contents data D appearing when a restricted data section 2 is disclosed.

Fig. 22(c) shows an example display of the contents data D appearing when a restricted data section 3 is disclosed.

As shown in Figs. 22(a) to 22(c), as the restricted data section 1, the restricted data section 2, and the restricted data section 3 are sequentially disclosed, the degree of transparency of a check pattern increases stepwise, so that image data pertaining to a portable cellular phone hidden behind the check pattern can be ascertained clearly.

As shown in Figs. 22(a) to 22(c), the display of the contents data D may also be changed stepwise in accordance with the disclosure status of the restricted data. Alternatively, when the disclosure statuses of all of the three sets of restricted data are brought into a disclosed state, the screen shown in Fig. 22(c) may be displayed.

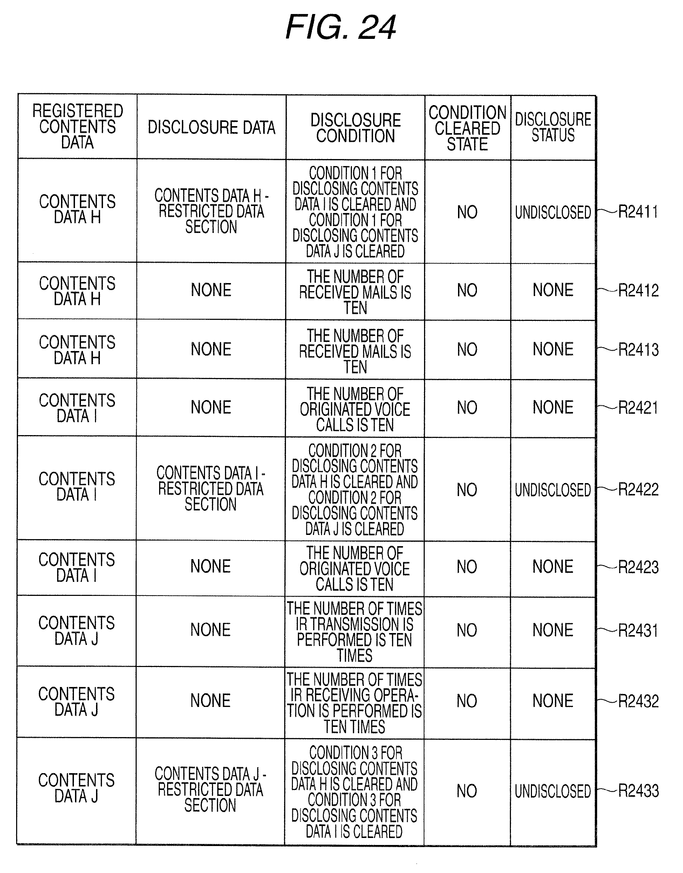

As shown in Figs. 23 and 24, a disclosure condition clear status included in another content can also be set in association with the disclosure condition for the restricted data.

As mentioned above, according to the portable cellular phone 10 or the contents server 100 of the third embodiment, by means of notifying the user that a plurality of sets of restricted data are included in a single set of contents data or associating the contents data with another set of contents data, the user can previously ascertain that restricted data are included in contents data; can have a sense of anticipation of the restricted data; and the user's willingness to browse, view, or purchase the contents data can be fueled.

Clear-up of a game in a portable cellular phone or a contents server, the number of answers given in response to a quiz, a period of time required to make an answer, or the like, may also be set as the condition for disclosing restricted data in the above embodiments.

The portable cellular phone of the present embodiment may also notify a contents provider, another provider, or the like, that the disclosure status of restricted data has become disclosed, in conjunction with an identification number of a server. As a result, the contents provider can synchronously ascertain the disclosure status of restricted data, and can distribute information about a hint, or the like, for disclosing restricted data whose disclosure rate is low to a portable cellular phone or can distribute the rank of a user, or the like, corresponding to a time elapsed until disclosure of the restricted data.

Although the present invention has been described in detail by reference to specific embodiments, it is manifest to those who are versed in the art to be able to make various alterations or modifications to the present invention without departing from the spirit and scope of the present invention.

The present patent application is based on Japanese Patent Application (JP-A-2005-319078) filed on November 2, 2005, the contents of which are hereby incorporated by reference.

### <Industrial Applicability>

As mentioned above, the information communications apparatus, the server, and the contents providing method of the present invention yield an advantage of the ability to fuel the user's willingness to browse, view, or purchase contents data, or the like, by means of causing the user to previously ascertain that restricted data are included in contents data and to have a sense of anticipation for the restricted data. The apparatus, the server, and the method are useful for a portable cellular phone, a personal computer, a PDA, or the like, which handles contents data such as text, an image, music, a motion picture, and the like.

## Claims

1. An information communications apparatus for acquiring contents data from a server, comprising:
contents analysis means for determining whether or not restricted data whose disclosure is limited are included in the contents data;
contents control means for determining whether or not a condition for disclosing the restricted data is fulfilled when the restricted data are determined to be included; and
notification means for reporting a disclosure status of the restricted data in accordance with a command from the contents control means, wherein
the notification means reports the disclosure status of the restricted data in accordance with a notification format previously set in the contents data.

2. The information communications apparatus according to claim 1, wherein the notification format is any one of display, vibration, or beeping; and
the notification means reports the disclosure status of the restricted data in accordance with the notification format.

3. The information communications apparatus according to claim 1, wherein the condition is associated with contents data identical with the contents data including the restricted data; and
the contents control means determines whether or not the condition is fulfilled.

4. The information communications apparatus according to claim 1, wherein the condition is associated with contents data differing from the contents data including the restricted data; and
the contents control means determines whether or not the condition is fulfilled.

5. The information communications apparatus according to claim 1 or 2, wherein the notification means notifies the server that the restricted data are disclosed when the contents control means determines that the condition is fulfilled.

6. A server for storing contents data, comprising:
contents analysis means for determining whether or not restricted data whose disclosure is limited are included in the contents data;
contents control means for determining whether or not a condition for disclosing the restricted data is fulfilled when the restricted data are determined to be included; and
notification means for reporting a disclosure status of the restricted data in accordance with a command from the contents control means, wherein
the notification means reports the disclosure status of the restricted data in accordance with a notification format previously set in the contents data.

7. A contents providing method, comprising:
a contents analysis step of determining whether or not restricted data whose disclosure is limited are included in the contents data;
a contents control step of determining whether or not a condition for disclosing the restricted data is fulfilled when the restricted data are determined to be included; and
a notification step of reporting a disclosure status of the restricted data in accordance with a result of determination rendered in the contents control step, wherein
the notification step is for reporting the disclosure status of the restricted data in accordance with a notification format previously set in the contents data.

8. The contents providing method according to claim 7, wherein the notification format is any one of display, vibration, or beeping; and
the notification step is for reporting the disclosure status of the restricted data in accordance with the notification format.
